(19) Europäisches Patentamt
European Patent Office
Office européen des brevets

(11) **EP 4 434 729 A1**

(12) **EUROPEAN PATENT APPLICATION**
published in accordance with Art. 153(4) EPC

(43) Date of publication:
**25.09.2024 Bulletin 2024/39**

(21) Application number: **22894951.7**

(22) Date of filing: **18.11.2022**

(51) International Patent Classification (IPC):
**B29C 64/264** (2017.01)     **B29C 64/30** (2017.01)
**B33Y 30/00** (2015.01)

(52) Cooperative Patent Classification (CPC):
**B29C 64/20; B29C 64/264; B29C 64/30;
B33Y 30/00; F21V 5/04; F21V 19/00**

(86) International application number:
**PCT/CN2022/132850**

(87) International publication number:
**WO 2023/088422 (25.05.2023 Gazette 2023/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.11.2021 CN 202122886604 U**

(71) Applicant: **Shenzhen Creality 3D Technology Co.,
Ltd.
Shenzhen, Guangdong 518110 (CN)**

(72) Inventors:
• **CHEN, Chun
Shenzhen, Guangdong 518110 (CN)**
• **CHEN, Shuquan
Shenzhen, Guangdong 518110 (CN)**
• **CHEN, Xiaochan
Shenzhen, Guangdong 518110 (CN)**

(74) Representative: **Zaboliene, Reda
Metida
Business center Vertas
Gyneju str. 16
01109 Vilnius (LT)**

(54) **LIGHT SOURCE DEVICE AND 3D PRINTER**

(57)     A light source device and a 3D printer. The light source device comprises a lamp panel (110), lamp beads (120), a lens assembly (200), and a display screen (300). The lens assembly (200) comprises a plurality of lenses (210); the display screen (300) is arranged above and spaced apart from the lamp panel (110); the plurality of lamp beads (120) are arranged at the top of the lamp panel (110); the distance between any adjacent lamp beads (120) is d; any three lamp beads (120) adjacent to each other and having a spacing of d define an equilateral triangle area (150) having a side length of d; a lens (210) is provided above each lamp bead (120); the lenses (210) are used for refracting dispersed light of the lamp beads (120) to form parallel light and projecting same to the display screen (300). In the light source device, a plurality of lamp beads (120) are arranged on the lamp panel (110), and any three lamp beads (120) adjacent to each other and having a spacing of d define an equilateral triangle area (150) having a side length of d. Compared with the existing uniform arrangement of a lamp bead array, in which square areas are formed between the adjacent lamp beads, the overlapping part of emitted light between the adjacent lamp beads is greatly reduced, and the uniformity of the light source is improved.

FIG. 1

## Description

FIELD

The present application relates to a technical field of 3D printing, particularly to a light source device and 3D printer.

BACKGROUND

A Liquid Crystal Display 3D printer uses a display screen to selectively illuminate a cross-section of a 3D printing model by passing light through. This process solidifies photosensitive resin consumables inside a resin tank. A light source system, as the core component of the Liquid Crystal Display 3D printer, directly affects printing accuracy and success rate through the uniformity of the emitted light. In the existing light source system, commonly used are array parallel light sources employing distributed area exposure splicing technology. This technology improves the uniformity of the light source through the uniform arrangement of many lamp bead arrays. However, there are many overlapping parts of emitted light between adjacent lamp beads in the array arrangement, and the intensity of the overlapping parts is stronger, thus affecting the uniformity of the light source.

SUMMARY

The present application discloses a light source device and 3D printer, to solve problems of that there are many overlapping parts of the emitted light between the adjacent lamp beads of the existing array uniformly arranged, which affects the uniformity of the light source.

A light source device, including a lamp panel, lamp beads, a lens assembly, and a display screen. The lens assembly includes a plurality of lenses; the display screen is arranged above and spaced apart from the lamp panel; the plurality of lamp beads are arranged at a top of the lamp panel; a distance between any adjacent lamp beads is d; any three lamp beads adjacent to each other and having a spacing of the distance d define an equilateral triangle area, a side length of the equilateral triangle area is the distance d; a lens is provided above each lamp bead; the lenses are configured for refracting dispersed light of the lamp beads to form parallel light and projecting same to the display screen.

In one embodiment, the three lamp beads defining the equilateral triangle area project three light spots on corresponding lenses of the plurality of lenses, ranges of the three light spots intersect at one point.

In one embodiment, the light source device includes an isolation base, the isolation base is arranged between the lamp panel and the lens assembly; a plurality of isolation cavities is provided on the isolation base, the plurality of isolation cavities is provided in one-to-one correspondence with the plurality of lamp beads.

In one embodiment, each of the plurality of isolation cavities has a hexagonal cross-section, a bottom surface of each lens of the plurality of lenses has a hexagonal shape, and the plurality of lenses are respectively capped on the corresponding isolation cavities.

In one embodiment, each lens of the plurality of lenses is a plano-convex lens.

In one embodiment, each lamp bead of the plurality of lamp beads is located at a focal point of the plano-convex lens.

In one embodiment, the light source device includes a heat dissipation plate, the lamp panel is arranged above the heat dissipation plate.

In one embodiment, the light source device includes an adjusting assembly, one end of the adjusting assembly is connected to the display screen, and another end of the adjusting assembly is movably connected to the heat dissipation plate, the adjusting assembly is configured to adjust a distance between the lens assembly and the display screen.

In one embodiment, the adjusting assembly includes one or more adjusting rod and one or more positioning member, a sidewall of the adjusting rod has an abutment surface, one end of the adjusting rod is connected to the display screen, and another end of the adjusting rod is connected to the heat dissipation plate, the heat dissipation plate defines one or more limiting hole, the positioning member passes through the limiting hole and abuts against the abutment surface.

An embodiment of the present application further provides a 3D printer that is capable of solving at least one of the above technical problems.

The 3D printer includes the light source device in above embodiments.

The present application has following beneficial effects:

The light source device of the present application includes the lamp panel, the plurality of lamp beads, the lens assembly, and the display screen, the display screen is arranged above the lamp panel, the plurality of lamp beads are arranged on the lamp panel, the distance between any adjacent lamp beads is d, and any three lamp beads adjacent to each other and having a spacing of d define the equilateral triangle area, a side length of the equilateral triangle area is the distance d. The lenses are configured for refracting dispersed light of the lamp beads to form parallel light and projecting same to the display screen. In the present application, the plurality of lamp beads is arranged on the lamp panel, and any three lamp beads adjacent to each other and having a spacing of d define the equilateral triangle area, the side length of the equilateral triangle area is the distance d. Compared with the existing uniform arrangement of a lamp bead array, in which square areas are formed between the adjacent lamp beads, the overlapping part of emitted light between the adjacent lamp beads is greatly reduced, and the uniformity of the light source is improved.

The present application further provides the 3D printer including the light source device. The 3D printer is capable of solving at least one of the above technical problems.

BRIEF DESCRIPTION OF THE DRAWINGS

FIG. 1 is an explosion view of a light source device in an embodiment.
FIG. 2. is a schematic drawing of the light source device in an embodiment.
FIG. 3. is a schematic drawing of an array of lamp beads in a prior art.
FIG. 4. is a schematic drawing of an array of lamp beads in the light source device in an embodiment.
FIG.5 is a schematic drawing of light path of any three lamp beads adjacent to each other in the light source device of the present application.
FIG. 6 is a schematic drawing of light path of any four lamp beads adjacent to each other in the prior art.
FIG. 7 is a schematic drawing of light spots of three lamp beads adjacent to each other in the light source device of the present application.
FIG. 8 is a schematic drawing of light spots of four adjacent lamp beads in the prior art.
FIG. 9 is a top view of an isolation base and the lamp beads in the light source device provided by embodiments of the present application.
FIG. 10 is a schematic diagram of a lens refracting light emitted from a lamp bead into parallel light in the light source device provided by embodiments of the present application.
FIG. 11 is a schematic drawing of light spots projected on the display screen by adjacent lamp beads through the isolation base in the light source device provided by an embodiment of the present application.
FIG. 12 is a schematic drawing of light spots projected onto a display screen by adjacent lamp beads through an isolation base in a prior art.

Description of main components or elements: 110-lamp panel; 120-lamp bead; 130-isolation base; 131-isolation cavity; 140-square isolation cavity; 150-equilateral triangle area; 160-square area; 180-first overlapping part; 190-second overlapping part; 200-lens assembly; 210-lens; 211-bottom surface; 220-lens holder; 230-third overlapping part; 240-fourth overlapping part; 300-display screen; 310-cover plate; 400-adjusting assembly; 410-adjusting rod; 411- abutment surface; 510-heat dissipation plate; 511-connection hole; 512-limiting hole; 520-fan; 540-support frame.

DETAILED DESCRIPTION

In order to make the technical problems solved, technical solutions, and technical effects achieved by the present application clearer, the technical solutions of the present application are further described below in conjunction with the accompanying drawings and embodiments.

In the description of the present application, terms "center", "longitudinal", "lateral", "length ", "width", "thickness", "top", "bottom", "front", "back", "left", "right", "vertical", "horizontal", "top", "bottom", "inside", "outer", "clockwise", "counterclockwise", "axial", "radial", "circumferential", etc. indicate orientation or positional relationships based on those shown in the accompanying drawings, and are intended only to facilitate the description of the present application and to simplify the description, and are not intended to indicate or imply that the device or element referred to have a particular orientation, and be constructed and operated in a particular orientation. Therefore, it cannot be construed as a limitation of the present application.

In addition, a feature defined as "first" or "second" may expressly or impliedly include one or more of such features for the purpose of distinguishing the descriptive features, in no order and without distinction of importance. In the description of the present application, unless otherwise specified, "more than one" means two or more.

In the description of the present application, unless otherwise expressly specified and limited, the terms "mounted", "coupled", "connected" are to be broadly construed, for examples, it can be a fixed connection or a detachable connection, it may be a fixed connection, a removable connection, or a connection in one piece, it may be a mechanical connection or an electrical connection, it may be a direct connection or an indirect connection through an intermediate medium, and it may be a connection within the two elements. For a person of ordinary skill in the art, the specific meaning of the above terms in the present application may be understood in specific cases.

In the present application, unless expressly provided and limited, the first feature being "above" or "below" the second feature may be a direct contact between the first and second features, or an indirect contact between the first and second features through an intermediate medium. Furthermore, the first feature being "above", "upon" and "on" the second feature may be that the first feature is directly above or diagonally above the second feature, or the first feature is horizontally higher than the second feature. The first feature is "below", "under" and "underneath" the second feature may be that the first feature is directly below or diagonally below the second feature, or the first feature is less horizontal than the second feature.

It should be noted that when an element is described to be "fixed to" or "set on" another element, it may be directly on the other element or there may be an intermediate element. When an element is described to be "attached" to another element, it may be directly attached to the other element or there may be indirect connecting elements. The terms "vertical", "horizontal", "top", "bottom", "left," "right," and similar expressions are used herein for illustrative purposes only and are not intended to be the exclusive means of implementation.

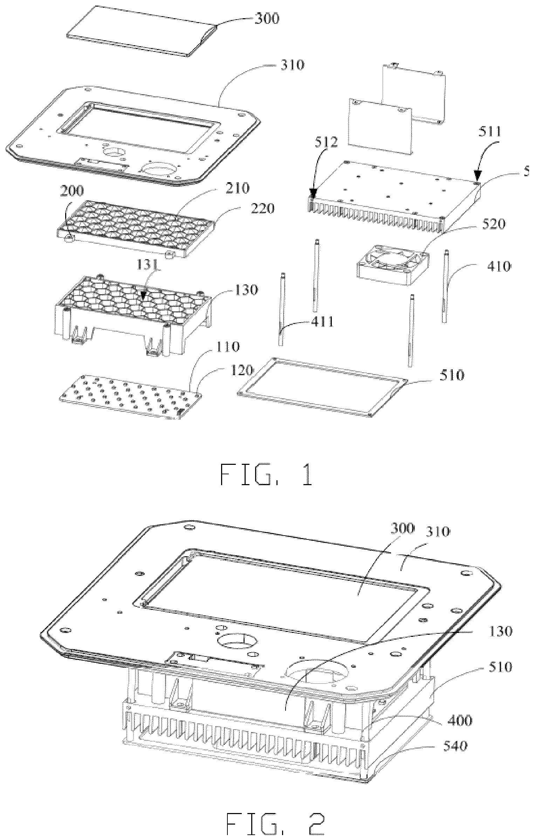

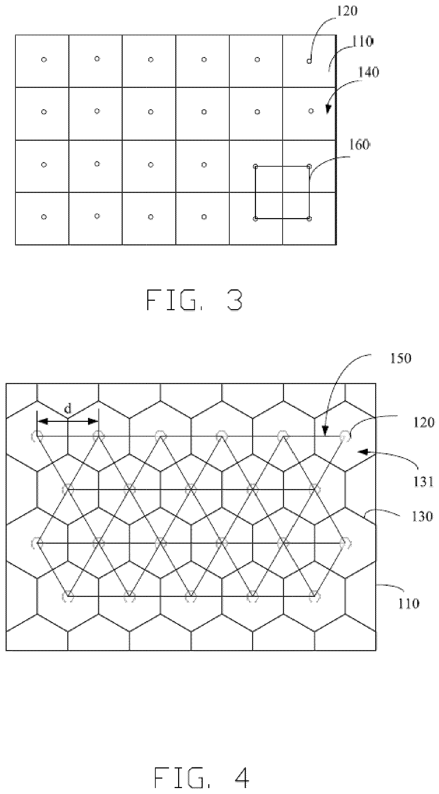

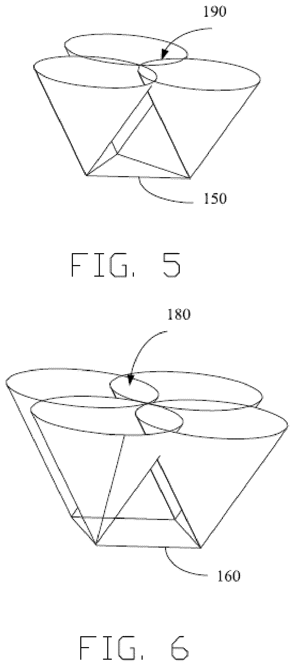

Referring to FIG. 1, FIG. 2, FIG. 4, and FIG. 5, FIG. 1 is an explosion view of the light source device in an embodiment; FIG. 2 is a schematic drawing of the light source device in an embodiment; FIG. 4 is a schematic drawing of an array of lamp beads in the light source device in an embodiment; FIG. 5 is a schematic drawing of light path of any three lamp beads adjacent to each other in the light source device. The light source device of the present application is applied in a Liquid Crystal Display 3D printer, the Liquid Crystal Display 3D printer uses a display screen to selectively illuminate a cross-section of a 3D printing model by passing light through, to solidify photosensitive resin consumables inside a resin tank, thus forming the 3D printing model. The uniformity of the emitted light of the light source device affects the uniformity of the curing of the photosensitive resin consumables, which affects the accuracy and success rate of 3D printing. In the existing light source system, commonly used are array parallel light sources employing distributed area exposure splicing technology, to improves the uniformity of the light source through the uniform arrangement of many lamp bead arrays. Referring to FIG. 3 and FIG. 6, FIG. 3 is a schematic drawing of an array of lamp beads in a prior art, FIG. 6 is a schematic drawing of light path of any four lamp beads adjacent to each other in the prior art, and the array of lamp beads 120 is uniform arrangement, a square area 160 is formed between four adjacent lamp beads 120, so that the light spots formed between adjacent lamp beads 120 have overlapping parts, and the light intensity of the overlapping parts is stronger, which makes the uniformity of the light source affected.

An embodiment of the present application provides a light source device, including a lamp panel 110, lamp beads 120, a lens assembly 200, and a display screen 300. The lens assembly 200 includes a plurality of lenses 210; the display screen 300 is arranged above and spaced apart from the lamp panel 110; the plurality of lamp beads 120 are arranged at a top of the lamp panel 110; a distance between any adjacent lamp beads 120 is d; any three lamp beads 120 adjacent to each other and having a spacing of d define an equilateral triangle area 150, a side length of the equilateral triangle area 150 is the distance d; a lens 210 is provided above each lamp bead 120; the lenses 210 are configured for refracting dispersed light of the lamp beads 120 to form parallel light and projecting the parallel light to the display screen 300.

In the present application, adjacent lamp beads 120 refer to two lamp beads 120 having a spacing of d. When the distance between two lamp beads 120 is greater than d, the two lamp beads 120 do not belong to the definition of adjacent lamp beads 120 in the present application. In the present application, the lens assembly 200 is provided between the display screen 300 and the lamp panel 110, and several lamp beads 120 are arranged on the lamp panel 110. The lamp bead 120 project dispersed light onto the corresponding lens 210, the lenses 210 refract dispersed light to form parallel light and projecting the parallel light to the display screen 300, wherein the refracted light tends to be perpendicular to the display screen 300, thus a parallel light source is provided for the display screen 300. A range of the light spot projected by the lamp bead 120 onto the corresponding lens 210 is capable of completely covering the corresponding lens 210, thus avoiding that part of the photosensitive resin consumables cannot be cured by exposure. When ranges of three light spots intersect at one point, $d = r\sqrt{3}$ ; when $d > r\sqrt{3}$ , a center of the equilateral triangle area 150 cannot be covered by the light spots, so that a corresponding portion of the photosensitive resin consumable cannot be cured by exposure. Therefore, the distance between any adjacent lamp beads 120 is $d \leq r\sqrt{3}$ .

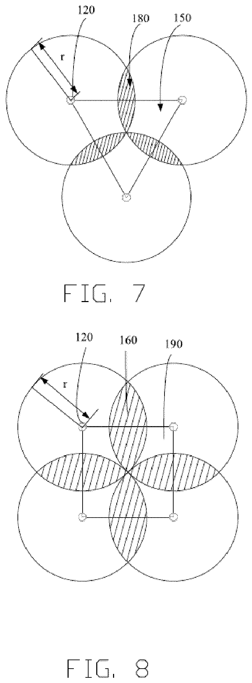

Referring to FIG. 4, FIG. 5, and FIG. 7, FIG. 7 is a schematic drawing of light spots of three lamp beads adjacent to each other in the light source device. The equilateral triangle area 150 is formed between the three adjacent lamp beads 120. In the present application, three lamp beads 120 adjacent to each other form an equilateral triangular area 150, the equilateral triangular area 150 is took as a smallest unit for illustration. The three lamp beads 120 located in the equilateral triangular area 150 emit light and form three partially overlapping light spots on the corresponding lenses 210, one of the light spots is projected by a lamp bead 120 to form a circle with a radius r onto the lens 210. When the three light spots intersect at one point, the overlapping part is minimized. Therefore, it is assumed that when the three light spots intersect at one point, a first overlapping part 180 is formed, wherein the shaded portion in FIG. 7 is the first overlapping part 180. An area of the first overlapping part 180 is $S_1 = \left(\pi - \frac{3\sqrt{3}}{2}\right)r^2$ , and a total area of the area enclosed by the three light spots is $T_1 = 3\pi r^2 - S_1$.

Referring to FIG. 3, FIG. 6, and FIG. 8, FIG. 8 is a schematic drawing of light spots of four adjacent lamp beads in the prior art. The array of lamp beads 120 is uniform arrangement in the prior art, a square area 160 is formed between the four adjacent lamp beads 120, the square area 160 is took as a smallest unit for illustration. Assuming that a light spot formed by one of the four lamp beads 120 projected onto the lens 210 is also a circle of radius r, when four light spots intersect at one point, a second overlapping part 190 is formed, wherein the shaded portion of FIG. 8 is the second overlapping part 190. An area of the second overlapping part 190 is $S_2 = 2r^2(\pi$

- 2), and a total area of the area enclosed by the four light spots is $T_2 = 4\pi r^2 - S_2$. By calculating a ratio $\partial_1$ of the area of the first overlapping part 180 to the total area of the area enclosed by the three light spots, and calculating a ratio $\partial_2$ of the area of the second overlapping part 190 to the total area of the area enclosed by the four light

$$\partial_1 = \frac{S_1}{T_1} < \partial_2 = \frac{S_2}{T_2}$$

spots, it can be found                                    . Therefore, overlapping part of the three light spots projected by the three adjacent lamp beads 120 onto the lamp panel 110 in embodiments of the present application is smaller than overlapping part of the four light spots projected by the four adjacent lamp beads 120 onto the lamp panel 110 in the prior art.

In the arrangement of the three adjacent lamp beads 120 on the lamp panel 110 into the equilateral triangle area 150, when the distance between the lenses 210 and the lamp beads 120 cannot make the three light spots intersect at one point, the area of overlapping part of the light spots is gradually increasing, which is prior art, so it will not be repeated. The arrangement of the array of lamp beads 120 is uniform arranged on the lamp panel 110 so that the square area 160 can be formed between four adjacent lamp beads 120 is also in accordance with the above law. Therefore, compared with the uniform arrangement of the lamp bead array so that the square area 160 can be formed between adjacent lamp beads 120 in the prior art, the arrangement of the three lamp beads 120 adjacent to each other to form the equilateral triangular area 150 in the present application, the overlapping part of the light emitted by the adjacent lamp beads 120 is greatly reduced, and the uniformity of the light source is improved.

Referring to FIG. 4, FIG. 5, and FIG. 7, in one embodiment, the three lamp beads 120, which form the equilateral triangular area 150, project three light spots onto the corresponding lenses 210, the three light spots intersect at one point.

From the above analysis, when the three lamp beads 120 located in the equilateral triangle area 150 emit light separately, and the three light spots projected onto the corresponding lenses 210 intersect at one point, the overlapping part of the emitted light between the adjacent lamp beads 120 is minimized, and the uniformity of the light source is improved.

Referring to FIG. 1, FIG. 2, and FIG. 9, FIG. 9 is a top view of an isolation base and the lamp beads in the light source device provided by embodiments of the present application. In one embodiment, the light source device includes an isolation base 130, and the isolation base 130 is arranged between the lamp panel 110 and the lens assembly 200; a plurality of isolation cavities 131 is provided on the isolation base 130, the plurality of isolation cavities 131 are provided in one-to-one correspondence with the plurality of lamp beads 120.

In one embodiment, each lamp bead 120 is extended in to one corresponding isolation cavity 131. Cavity walls of the isolation cavities 131 make the lamp beads 120 on the lamp panel 110 to be isolated from each other, and the lamp beads 120 do not cross illuminate between each other and do not interfere each other. Dispersed light emitted by the lamp beads 120 is refracted by the lenses 210 to form parallel light, so that the uniformity of the light source is improved.

In other embodiment, a gap is defined between each lamp bead 120 and the corresponding isolation cavities 131 in a vertical direction. Since the lamp beads 120 have a certain projection angle, most of the light emitted by the lamp beads 120 is projected into the corresponding isolation cavities 131, and only a small amount of the light is projected into the isolation cavities 131 corresponding to the neighboring lamp beads 120. Therefore, there is not much interference with the light emitted between the adjacent lamp beads 120, and heat generated by luminous emission of the lamp beads 120 is released through the gaps, and the service life of the lamp beads 120 is improved.

Referring to FIG. 1, FIG. 4, FIG. 9, FIG. 10, and FIG. 11, FIG. 11 is a schematic drawing of light spots projected on the display screen by adjacent lamp beads through the isolation base in the light source device provided by an embodiment of the present application. In one embodiment, the isolation cavity 131 has a hexagonal cross-section, a bottom surface 211 of each lens 210 has a hexagonal shape, and the plurality of lenses 210 are respectively capped on the corresponding isolation cavities 131.

In one embodiment, adjacent hexagonal lenses 210 covered on top of adjacent isolation cavities 131 are connected to each other. Since each inner angle of the hexagonal shape is 120 degrees, bottom surfaces of the hexagonal lenses 210 covered on the top of the isolation cavities 131 form a complete plane. Since the plurality of lamp beads 120 are provided in one-to-one correspondence with the plurality of isolation cavities 131, most of the light emitted by the lamp beads 120 is blocked by the cavity walls of corresponding isolation cavities 131, and only a small part of the light dispersed in the generally vertical direction is emitted from an upper end of the isolation cavities 131. Since the isolation cavity 131 has hexagonal cross-section, the light emitted from the upper end of the isolation cavity 131 is hexagonal, and since the bottom surface 211 of the lens 210 is hexagonal and is provided on the corresponding isolation cavity 131, the light spot projected on the lens 210 from the upper end of the isolation cavity 131 is hexagonal, the hexagonal light spot covers the lens 210 whose bottom surface 211 is hexagonal, (the thin cavity wall of the isolation cavity 131 is negligible). Since the adjacent hexagonal lenses 210 covered on the adjacent isolation cavity 131 are connected to each other, the refracted light passing through the hexagonal lenses 210 can completely cover the display screen 300, thus avoiding that part of the photosensitive resin consumables cannot be cured by exposure. Since the bottom surface 211 of all the lenses 210 is evenly covered by light spots, and the adjacent hexagonal lenses 210 covered on adjacent isolation cavities 131 are connected to each other, thus avoiding the overlapping of the light spots projected by adjacent lamp beads 120 onto the corresponding lenses 210, and thus improving the uniformity of the light source.

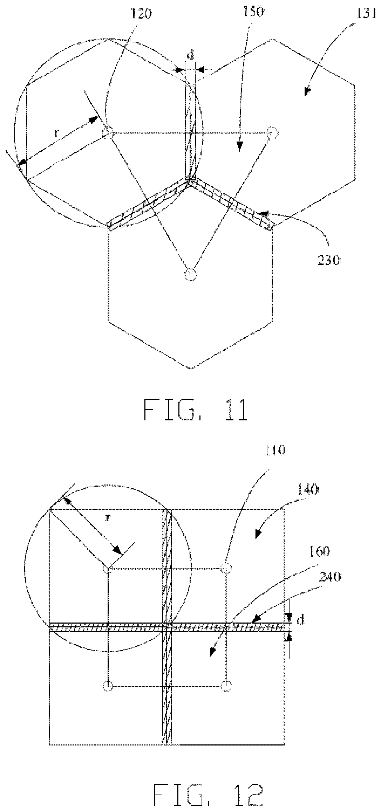

In one embodiment, when the hexagonal light spot is refracted by the corresponding lens 210 to the display screen 300, since the refracted light has a certain angle with the light perpendicular to the display screen 300, three hexagonal light spots projected by the three lamp beads 120 located in the equilateral triangle area 150 to the display screen 300 will expand outwardly along a radial direction of the light spots. Therefore, the three hexagonal light spots will be overlapped on three adjacent edges where the three hexagonal light spots meet to form a third overlapping part 230. The shaded portion in FIG. 11 is the third overlapping part 230. If a expand width of the light spot projected by the light bead 120 onto the display screen 300 through the corresponding lens 210 is $\frac{d}{2}$, then an overlap width the three edges where the three hexagonal light spots meet is d, and an area of the third overlapping part 230 is $S_3$ = 3rd, a total area of the area enclosed by the three hexagonal light spots is $T_3 = \frac{9\sqrt{3}}{2}r^2$.

Referring to FIG. 3 and FIG. 12, FIG. 12 is a schematic drawing of light spots projected onto a display screen by adjacent lamp beads through an isolation base in a prior art. In the prior art, the array of lamp beads 120 is uniformly arranged so that a square area 160 can be formed between adjacent lamp beads 120, bottom surface of the corresponding lens is square, and the plurality of lamp beads 120 are provided in one-to-one correspondence with square isolation cavities 140. Four square light spots projected on the display screen 300 by four adjacent lamp beads 120 located in the square area 160 will form an overlapping part at four edges where the four square light spots meet, to form a fourth overlapping part 240, the shaded portion in the FIG. 12 is the fourth overlapping part 240. An area of the fourth overlapping part 240 is $S_4 = 4rd\sqrt{2}$, and a total area of the area enclosed by the four square light spots is $T_4$ = 8$r^2$.

By calculating a ratio $\partial_3$ of the area $S_3$ of the third overlapping part 230 to the total area $T_3$ of the area enclosed by the three hexagonal light spots, and calculating a ratio $\partial_4$ of the area $S_4$ of the fourth overlapping part 240 to the total area $T_4$ of the area enclosed by the four square light spots, it can be found that

$$\partial_3 = \frac{S_3}{T_3} < \partial_4 = \frac{S_4}{T_4}$$

. Therefore, overlapping part of the three light spots projected by the three adjacent lamp beads 120 onto the lamp panel 110 in embodiments of the present application is smaller than overlapping part of the four light spots projected by the four adjacent lamp beads 120 onto the lamp panel 110 in the prior art. As the angle between the refracted light and the parallel light perpendicular to the display screen 300 is very small, the expand width $\frac{d}{2}$ of the light spot is also very small, thus the area $S_3$ of the third overlapping part 230 is very small, thereby greatly improving the uniformity of the light source.

Referring to FIG. 1, FIG. 9, and FIG. 10, in one embodiment, the lens 210 is a plano-convex lens.

In one embodiment, the plano-convex lenses are adherent to each other so that there is no gap between the plano-convex lenses, and bottom surfaces 211 of the plurality of lenses 210 form a complete plane, so that the lights projected onto bottom surfaces 211 of the lenses 210 are refracted as hexagonal surface light sources on the display screen 300, so that the display screen 300 is completely covered by the light source, thereby improving the printing accuracy.

In one embodiment, the lens assembly 200 includes a lens holder 220, the lens holder 220 is mounted on the isolation base 130, and the plurality of lenses 210 are correspondingly provided on the lens holder 220, thereby facilitating the installation and removal of the lenses 210.

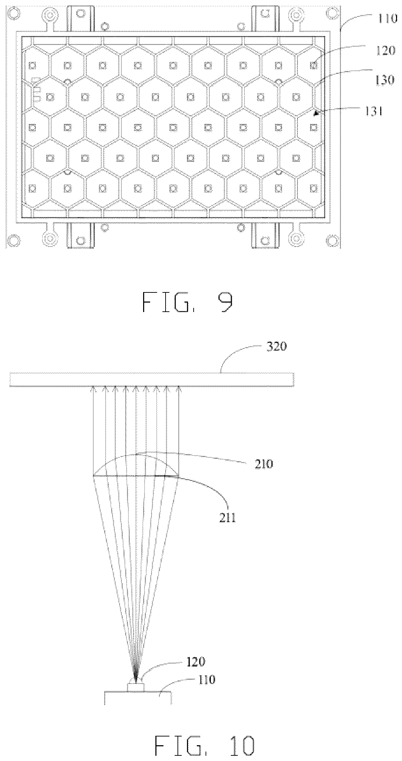

Referring to FIG. 10, in one embodiment, each lamp bead 120 is located at the focal point of a plano-convex lens.

In one embodiment, each lamp bead 120 is located at the focal point of the plano-convex lens, thereby causing dispersed light emitted by the lamp bead 120 is refracted to refract to form parallel light projected on the display screen 300 through the lens 210, thereby improving the collimation of the refracted light, thus decreasing the angle between the refracted light and the parallel light rays, so that the area of the third overlapping part decreases, and thereby improving the uniformity of the light source.

Referring to FIG. 1 and FIG. 2, in one embodiment, the light source device includes a heat dissipation plate 510, the lamp panel 110 is arranged above the heat dissipation plate 510.

In one embodiment, the heat dissipation plate 510 is mounted on a side of the lamp panel 110 away from the lamp beads 120, when the lamp beads 120 emits lights, a large amount of heat will be generated, and the heat dissipation plate 510 dissipates the heat in a timely manner, so that the service life of the lamp beads 120 can be improved.

Furthermore, the light source device includes a fan 520, the fan 520 is arranged on a lower end of the heat dissipation plate 510, thereby accelerating air flow and improving the heat dissipation efficiency of the heat dissipation plate 510.

Referring to FIG. 1 and FIG. 2, in one embodiment, the light source device includes an adjusting assembly 400, one end of the adjusting assembly 400 is connected to the display screen 300, and another end is movably connected to the heat dissipation plate 510. The adjusting assembly 400 is configured to adjust a distance between the lens assembly 200 and the display screen 300.

Since the lenses 210 are mounted on the isolation base 130, the isolation base 130 is mounted on the lamp panel 110, and the lamp panel 110 is mounted on the heat dissipation plate 510, when the heat dissipation plate 510 is moved by the adjusting assembly 400, the distance between the lens 210 and the display screen 300 changes, so as to be able to adjust the intensity and uniformity of the illumination of the light source projected on the display screen 300.

Referring to FIG. 2, in one embodiment, the adjusting assembly 400 includes one or more adjusting rods 410 and one or more positioning members. A sidewall of each adjusting rod 410 has an abutment surface 411, one end of the adjusting rod 410 is connected to the display screen 300, and another end of the adjusting rod 410 is connected to the heat dissipation plate 510. The heat dissipation plate 510 defines one or more limiting holes 512, the positioning members are able to pass through the limiting holes 512 and be abutted to the abutment surfaces 411.

In one embodiment, corners of the heat dissipation plate 510 define one or more connection holes 511 extending in the vertical direction, and the limiting holes 512 are in communication with the connection holes 511, and one end of the adjusting rods 410 extend into the connection holes 511 so as to be movably connected with the heat dissipation plate 510. One end of the positioning members passes through the limiting holes 512 and abut against the abutment surfaces 411, thereby restricting a relative movement of the heat dissipation plate 510 and the adjusting rod 410, and fixing the heat dissipation plate 510 in a current position. In one embodiment, the positioning members are threaded with inner walls of the limiting holes 512, thereby the positioning members are stably connected to the heat dissipation plate 510. In one embodiment, the positioning member is a screw.

When the distance between the lens 210 and the display screen 300 is to be adjusted, the positioning members are rotated so that the ends of the positioning members are separated from the abutment surfaces 411, the heat dissipation plate 510 is capable of moving relative to the adjusting rods 410, and then the positioning member is rotated in an opposite direction, the positioning members are stably abutted against the abutment surfaces 411, increasing the friction with the contact surface 411, and improving the effect of the restriction on the heat dissipation plate 510.

Furthermore, the abutment surface 411 is a flat cut surface, and when a bottom end of the screw is abutted to the flat cut surface, since the bottom end of the screw is also a flat surface, the contact area between the screw and the flat cut surface is increased, thereby increasing the friction between the screw and the flat cut surface, so as to make the positioning member stably abutted to the abutment surface 411, and to improve the effect of the restriction of the heat dissipation plate 510. In other embodiments, the abutment surface 411 may be a curved surface, as long as the abutment surface 411 is capable of cooperating with the positioning member to realize the restriction of the heat dissipation plate 510.

Furthermore, the light source device includes a support frame 540, and an end of the adjusting rod 410 that is away from the display screen 300 is connected to the support frame, thereby enabling the adjusting rod 410 to stably support the display screen 300.

Referring to FIG. 1 and FIG. 2, in one embodiment, the light source device includes a cover plate 310, the cover plate 310 is connected to the adjusting rod 410. cover plate 310 defines an opening, and the display screen 300 is provided on the opening, so as to enable the light source to be accurately projected on the display screen 300, which facilitates 3D printing.

Referring to FIG. 1, FIG. 2, FIG. 9, and FIG. 11, an embodiment of the present application further provides a 3D printer including the light source device as described above.

In the present application, the three adjacent lamp beads 120 on the lamp panel 110 are arranged in the equilateral triangle area 150 to reduce the overlapping area of the light spots of the adjacent lamp beads 120 projected on the lenses 210. Furthermore, the lenses 210 with hexagonal bottom surfaces 211 are separately covered with the corresponding hexagonal isolation cavities 131, so that the light spots projected on the lenses 120 covers the bottom surfaces 211 of the lenses 210, thereby greatly reducing the overlapping area of the light spots of adjacent lamp beads 120 projected on the lenses 210, and improving the uniformity of the light source.

The various technical features of the above-described embodiments can be combined arbitrarily, and in order to make the description concise, all possible combinations of the technical features in the above embodiments are not exhaustive. However, as long as there is no contradiction in the combinations of these technical features, all of them should be regarded as being within the scope of the present specification.

The above-described embodiments express only several embodiments of the present application, which are described in a specific and detailed manner, but are not to be construed as a limitation of the patent scope of the application. For a person of ordinary skill in the art, several deformations and improvements can be made without departing from the conception of the present application, all of which fall within the scope of protection of the present application.

## Claims

1. A light source device, **characterized in that**, comprising:

   a lamp panel,
   lamp beads,
   a lens assembly, and
   a display screen, wherein the lens assembly comprises a plurality of lenses, the display screen is arranged above and spaced apart from the lamp panel; the plurality of lamp beads are arranged on the lamp panel; a distance between any adjacent lamp beads of the plurality of lamp beads is d; any three lamp beads of the plurality of lamp beads adjacent to each other and having a spacing of the distance d define an equilateral triangle area, a side length of the equilateral triangle area is the distance d; each lens of the plurality of lenses is provided above each lamp bead of the plurality of lamp beads; the plurality of lenses are configured for refracting dispersed light of the plurality of lamp beads to form parallel light and projecting the parallel light to the display screen.

2. The light source device as claimed in claim 1, **characterized in that**, the any three lamp beads defining the equilateral triangle area project three light spots on corresponding lenses of the plurality of lenses, ranges of the three light spots intersect at one point.

3. The light source device as claimed in claim 1 or claim 2, **characterized in that**, the light source device comprises an isolation base, the isolation base is arranged between the lamp pane and the lens assembly; a plurality of isolation cavities is provided on the isolation base, the plurality of isolation cavities is provided in one-to-one correspondence with the plurality of lamp beads.

4. The light source device as claimed in claim 3, **characterized in that**, each of the plurality of isolation cavities has a hexagonal cross-section, a bottom surface of each lens of the plurality of lenses has a hexagonal shape, and each of the plurality of lenses are respectively capped on a corresponding isolation cavity of the plurality of isolation cavities.

5. The light source device as claimed in claim 4, **characterized in that**, each lens of the plurality of lenses is a plano-convex lens.

6. The light source device as claimed in claim 5, **characterized in that**, each lamp bead of the plurality of lamp beads is located at a focal point of the plano-convex lens.

7. The light source device as claimed in claim 4, **characterized in that**, the light source device further comprises a heat dissipation plate, the lamp panel is arranged above the heat dissipation plate.

8. The light source device as claimed in claim 7, **characterized in that**, the light source device further comprises an adjusting assembly, one end of the adjusting assembly is connected to the display screen, and another end of the adjusting assembly is movably connected to the heat dissipation plate, the adjusting assembly is configured to adjust a distance between the lens assembly and the display screen.

9. The light source device as claimed in claim 8, **characterized in that**, the adjusting assembly comprises one or more adjusting rod and one or more positioning member, a sidewall of the adjusting rod has an abutment surface, one end of the adjusting rod is connected to the display screen, and another end of the adjusting rod is connected to the heat dissipation plate, the heat dissipation plate defines one or more limiting hole, the positioning member passes through the limiting hole and abuts against the abutment surface.

10. A 3D printer, **characterized in that**, comprising the light source device as claimed in any one of claim 1 to claim 9.

FIG. 1

FIG. 2

FIG. 3

FIG. 4

190

150

FIG. 5

180

160

FIG. 6

FIG. 7

FIG. 8

FIG. 9

FIG. 10

FIG. 11

FIG. 12

## INTERNATIONAL SEARCH REPORT

| International application No. |
| --- |
| **PCT/CN2022/132850** |

**A.    CLASSIFICATION OF SUBJECT MATTER**

B29C64/264(2017.01)i;B29C64/30(2017.01)i;B33Y30/00(2015.01)i

According to International Patent Classification (IPC) or to both national classification and IPC

**B.    FIELDS SEARCHED**

Minimum documentation searched (classification system followed by classification symbols)

IPC： B29C, B33Y

Documentation searched other than minimum documentation to the extent that such documents are included in the fields searched

Electronic data base consulted during the international search (name of data base and, where practicable, search terms used)

CNTXT, ENTXTC, VEN, CNKI: 光源, 3D打印, 光固化, 均匀, 重叠, 等边三角形, 正三角形, 透镜, 显示屏, 灯珠, three dimensional, print+, light, uniform, regular triangle

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 210501439 U (ZHEJIANG FLASHFORGE 3D TECHNOLOGY CO., LTD.) 12 May 2020 (2020-05-12)<br>        description, paragraphs [0026]-[0029], and figure 1 | 1-10 |
| Y | CN 211345207 U (AIKEXIN (GUANGDONG) INTELLIGENT TECHNOLOGY CO., LTD.) 25 August 2020 (2020-08-25)<br>        description, paragraphs [0032]-[0043], and figures 4-10 | 1-10 |
| Y | CN 209971566 U (ZHANGZHOU ECHO ELECTRONIC TECHNOLOGY CO., LTD.) 21 January 2020 (2020-01-21)<br>        claims 1-4, and figures 1-3 | 1-10 |
| Y | CN 213472197 U (SHENZHEN CREALITY 3D TECHNOLOGY CO., LTD.) 18 June 2021 (2021-06-18)<br>        description, paragraphs [0040]-[0046], and figures 1-2 | 1-10 |
| Y | JP 2013243033 A (TOSHIBA LIGHTING & TECHNOLOGY) 05 December 2013 (2013-12-05)<br>        description, paragraphs [0011]-[0066], and figure 5 | 1-10 |

☐ Further documents are listed in the continuation of Box C.          ☑ See patent family annex.

| *    Special categories of cited documents: | "T"    later document published after the international filing date or priority date and not in conflict with the application but cited to understand the principle or theory underlying the invention |
| --- | --- |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **01 February 2023** | **08 February 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/132850**

| Patent document cited in search report | | | Publication date (day/month/year) | Patent family member(s) | | | Publication date (day/month/year) |
|---|---|---|---|---|---|---|---|
| CN | 210501439 | U | 12 May 2020 | None | | | |
| CN | 211345207 | U | 25 August 2020 | None | | | |
| CN | 209971566 | U | 21 January 2020 | None | | | |
| CN | 213472197 | U | 18 June 2021 | None | | | |
| JP | 2013243033 | A | 05 December 2013 | JP | 5958805 | B2 | 02 August 2016 |
| | | | | CN | 103423637 | A | 04 December 2013 |

Form PCT/ISA/210 (patent family annex) (July 2022)